(19) Europäisches Patentamt
European Patent Office
Office européen des brevets

(11) EP 2 810 970 A1

# (12) EUROPÄISCHE PATENTANMELDUNG

(43) Veröffentlichungstag:
**10.12.2014 Patentblatt 2014/50**

(21) Anmeldenummer: **13170748.1**

(22) Anmeldetag: **06.06.2013**

(51) Int Cl.:
***C08G 18/50*** (2006.01)
***C09K 3/32*** (2006.01)
***C08K 3/00*** (2006.01)
***C08G 18/38*** (2006.01)
***C08G 18/64*** (2006.01)
***C08J 9/00*** (2006.01)
***C08G 18/32*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **HILTI Aktiengesellschaft**
**9494 Schaan (LI)**

(72) Erfinder:
- **Maruska, Juliane**
  **72766 Reutlingen (DE)**
- **Brinkhorst, Johannes**
  **86899 Landsberg (DE)**
- **Paetow, Mario**
  **86859 Igling (DE)**
- **Wölfle, Ingrid**
  **86157 Augsburg (DE)**
- **Lewandowski, Wolfgang**
  **86161 Augsburg (DE)**
- **Simon, Sebastian**
  **86807 Buchloe Lindenberg (DE)**

(74) Vertreter: **Hilti Aktiengesellschaft**
**Corporate Intellectual Property**
**Feldkircherstrasse 100**
**Postfach 333**
**9494 Schaan (LI)**

## (54) Dämmschichtbildende Zusammensetzung und deren Verwendung

(57) Es wird eine dämmschichtbildende Zusammensetzung beschrieben, die ein Bindemittel auf Polyharnstoff-Basis enthält. Durch die erfindungsgemäße Zusammensetzung, deren Expansionsrate relativ hoch ist, können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine große isolierende Wirkung erreicht werden kann. Die erfindungsgemäße Zusammensetzung eignet sich besonders für den Brandschutz, insbesondere als Beschichtung von metallischen und nicht metallischen Substraten, etwa Stahlbauteilen, wie Stützen, Trägern, Fachwerkstäben, zur Erhöhung der Feuerwiderstandsdauer.

EP 2 810 970 A1

**Beschreibung**

Die vorliegende Erfindung betrifft eine dämmschichtbildende Zusammensetzung, insbesondere eine Zusammensetzung mit intumeszierenden Eigenschaften, die ein Bindemittel auf Polyharnstoff-Basis enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert einen großen Teil seiner Stabilität und seiner Tragfähigkeit. Diese Temperatur kann je nach Brandbelastung, etwa bei direkter Feuereinwirkung (ca. 1000°C), bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z.B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren im Stand der Technik verschiedene Systeme. Im Wesentlichen wird zwischen 100%-Systemen und lösemittel- bzw. wasserbasierten Systemen unterschieden. Bei den lösemittel- bzw. wasserbasierten Systemen werden Bindemittel, meist Harze, als Lösung, Dispersion oder Emulsion auf das Bauteil aufgetragen. Diese können als Ein- oder Mehrkomponenten-Systeme ausgeführt werden. Nach dem Auftragen verdunstet das Lösungsmittel bzw. das Wasser und hinterlässt einen Film, der mit der Zeit trocknet. Hierbei kann ferner zwischen solchen Systemen unterschieden werden, bei denen sich während der Trocknung die Beschichtung im Wesentlichen nicht mehr ändert, und solchen Systemen, bei denen nach dem Verdunsten das Bindemittel primär durch Oxidations- und Polymerisationsreaktionen härtet, was beispielsweise durch den Luftsauerstoff induziert wird. Die 100%-Systeme enthalten die Bestandteile des Bindemittels ohne Lösungsmittel bzw. Wasser. Sie werden auf das Bauteil aufgetragen, wobei die "Trocknung" der Beschichtung lediglich durch Reaktion der Bindemittelbestandteile untereinander erfolgt.

Die Systeme auf Lösemittel- oder Wasserbasis haben den Nachteil, dass die Trockenzeiten, auch Aushärtezeiten genannt, lang sind und zudem mehrere Schichten aufgetragen werden müssen, also mehrerer Arbeitsgänge bedürfen, um die erforderliche Schichtdicke zu erreichen. Da jede einzelne Schicht vor dem Auftragen der nächsten Schicht entsprechend getrocknet sein muss, führt dies zu einem hohen Aufwand an Arbeitszeit und dementsprechend hohen Kosten und zu einer Verzögerung bei der Fertigstellung des Bauwerks, da je nach klimatischen Bedingungen zum Teil mehrere Tage vergehen, bis die erforderliche Schichtdicke aufgetragen ist. Nachteilig ist auch, dass durch die erforderliche Schichtdicke die Beschichtung während des Trocknens oder bei Hitzeeinwirkung zur Rissbildung und zum Abblättern neigen kann, wodurch im schlimmsten Fall der Untergrund teilweise freigelegt wird, insbesondere bei Systemen, bei denen das Bindemittel nach Verdunsten des Lösungsmittels bzw. des Wassers nicht nachhärtet.

Um diesen Nachteil zu umgehen, wurden Zwei- oder Mehrkomponentensysteme auf Epoxid-Amin-Basis entwickelt, die nahezu ohne Lösemittel auskommen, so dass eine Aushärtung wesentlich schneller erfolgt und zudem dickere Schichten in einem Arbeitsgang aufgetragen werden können, so dass die erforderliche Schichtdicke wesentlich schneller aufgebaut ist. Diese haben jedoch den Nachteil, dass das Bindemittel eine sehr stabile und starre Polymermatrix mit oftmals hohem Erweichungsbereich bildet, was die Schaumbildung durch die Schaumbildner behindert. Daher müssen dicke Schichten aufgetragen werden, um eine ausreichende Schaumdicke für die Isolierung zu erzeugen. Dies ist wiederum nachteilig, da viel Material erforderlich ist. Damit diese Systeme aufgetragen werden können, sind häufig

Verarbeitungstemperaturen von bis zu +70°C erforderlich, was die Anwendung dieser Systeme arbeitsaufwendig und teuer in der Installation macht.

Der Erfindung liegt daher die Aufgabe zugrunde, eine dämmschichtbildende Zusammensetzung für Beschichtungssysteme der eingangs erwähnten Art zu schaffen, die die genannten Nachteile vermeidet, die insbesondere nicht lösemittel- oder wasserbasiert ist und eine schnelle Aushärtung aufweist, aufgrund entsprechend abgestimmter Viskosität einfach aufzutragen ist und aufgrund der erreichbaren guten Intumeszenzrate, d.h. der Bildung einer effektiven Aschekrustenschicht, nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine dämmschichtbildende Zusammensetzung mit einem Bestandteil A, der eine Isocyanatverbindung enthält, mit einem Bestandteil B, der eine gegenüber Isocyanatverbindungen reaktionsfähige Reaktivkomponente enthält, die unter Verbindungen mit mindestens zwei Aminogruppen ausgewählt ist, wobei die Aminogruppen unabhängig voneinander primäre und/oder sekundäre Aminogruppen sind, und mit einem Bestandteil C, der ein dämmschichtbildendes Additiv enthält, wobei das dämmschichtbildende Additiv ein Gemisch, das gegebenenfalls mindestens einen Kohlenstofflieferant, mindestens einen Dehydrierungskatalysator und mindestens ein Treibmittel enthält, umfasst.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass die den Systemen auf Lösemittel- oder Wasserbasis inhärenten langsamen Aushärtezeiten deutlich verkürzt werden konnten, was die Arbeitszeit erheblich verringert. Aufgrund der im Applikationsbereich geringen Viskosität der Zusammensetzung, eingestellt über geeignete Verdickersysteme, ist im Unterschied zu Epoxid-Amin-Systemen ein Auftragen ohne Erwärmen der Zusammensetzung möglich, wie zum Beispiel durch das weitverbreitete Airless-Sprühverfahren.

Aufgrund des gegenüber den Systemen auf Epoxid-Amin-Basis niedrigeren Erweichungsbereiches der Polymermatrix ist die Intumeszenz hinsichtlich der Expansionsrate relativ hoch, so dass selbst mit dünnen Schichten eine große isolierende Wirkung erreicht wird. Hierzu trägt auch der mögliche hohe Füllgrad der Zusammensetzung mit Brandschutzadditiven bei, der unter anderem auch dadurch erreicht werden kann, dass die Zusammensetzung als Zwei- oder Mehrkomponenten-System konfektioniert werden kann. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet und damit keinen Volumenverlust durch das Abtrocknen von Lösemitteln oder bei wasserbasierten Systemen von Wasser erleidet, sondern durch Polyaddition härtet. So ist bei einem klassischen System ein Lösemittelgehalt von etwa 25% typisch. Bei der erfindungsgemäßen Zusammensetzung verbleiben mehr als 95 % der Beschichtung auf dem zu schützenden Substrat. Ferner ist die relative Aschekrustenstabilität aufgrund der vorteilhaften Struktur des im Brandfall gebildeten Schaums sehr hoch.

Verglichen mit lösemittel- oder wasserbasierten Systemen, wenn sie ohne Grundierung aufgetragen werden, zeigen die erfindungsgemäßen Zusammensetzungen eine ausgezeichnete Haftung an unterschiedlichen metallischen und nicht metallischen Substraten, sowie eine ausgezeichnete Kohäsion und Schlagbeständigkeit.

Zum besseren Verständnis der Erfindung werden die folgenden Erläuterungen der hierin verwendeten Terminologie als sinnvoll erachtet. Im Sinne der Erfindung:

- umfasst der Begriff *"aliphatische Verbindung"* acyclische und cyclische, gesättigte oder ungesättigte Kohlenwasserstoffverbindungen, die nicht aromatisch sind (PAC, 1995, 67, 1307; Glossary of class names of organic compounds and reactivity intermediates based on structure (IUPAC Recommendations 1995));

- bedeutet *"Polyamin"* eine gesättigte, offenkettige oder cyclische organische Verbindung, die von einer wechselnden Anzahl sekundärer Aminogruppen (-NH-) unterbrochen ist und die, insbesondere im Falle der offenkettigen Verbindungen, primäre Aminogruppen ($-NH_2$) an den Kettenenden aufweist;

- bedeutet *"organischer Rest"* ein Kohlenwasserstoffrest, der gesättigt oder ungesättigt, substituiert oder unsubstituiert, aliphatisch, aromatisch oder araliphatisch sein kann; wobei *"araliphatisch"* bedeutet, dass sowohl aromatische als auch aliphatische Reste enthalten sind;

- bedeutet *"chemische Intumeszenz"* die Bildung einer voluminösen, isolierenden Ascheschicht durch aufeinander abgestimmte Verbindungen, die bei Hitzeeinwirkung miteinander reagieren;

- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens

zunimmt;

- bedeutet *"dämmschichtbildend",* dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;

- ist ein *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als *"Kohlenstoffgerüstbildner"* bezeichnet;

- ist ein *"Säurebildner"* eine Verbindung, die unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff *"Dehydrierungskatalysator"* verwendet;

- ist ein *"Treibmittel"* eine Verbindung, die sich bei erhöhter Temperatur unter Entwicklung inerter, d.h. nicht-brennbarer Gase zersetzt und die das durch die Carbonifizierung gebildete Kohlenstoffgerüst und gegebenenfalls das erweichte Bindemittel zu einem Schaum aufbläht (Intumeszenz); dieser Begriff wird gleichbedeutend mit *"Gasbildner"* verwendet;

- ist ein *"Aschekrustenstabilisator"* eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden; die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.

Als Isocyanatverbindung können alle dem Fachmann bekannten aliphatischen und/oder aromatischen Isocyanate einer mittleren NCO-Funktionalität von 1 oder größer, bevorzugt größer als 2, einzeln oder in beliebigen Mischungen untereinander verwendet werden.

Beispiele für aromatische Polyisocyanate sind 1,4-Phenylendiisocyanat, 2,4- und/oder 2,6-Toluylendiisocyanat, Xylylendiisocyanat, hydriertes Xylylendiisocyanat, Tetramethylxylylendiisocyanat, 1,5-Naphthylendiisocyanat, Diphenylenmethan-2,4'-und/oder -4,4'-diisocyanat, Triphenylmethan-4,4',4"-triisocyanat und Bis- und Tris-(isocyanatoalkyl)-benzole, -toluole sowie -xylole.

Bevorzugt werden Isocyanate aus der Reihe der aliphatischen Vertreter, wobei diese ein Kohlenstoffgrundgerüst (ohne die enthaltenen NCO-Gruppen) von 3 bis 30, bevorzugt 4 bis 20 Kohlenstoffatomen aufweisen. Beispiele für aliphatische Polyisocyanate sind Bis-(isocyanatoalkyl)ether oder Alkandiisocyanate, wie Propandiisocyanate, Butandiisocyanate, Pentandiisocyanate, Hexandiisocyanate (z.B. Hexamethylendiisocyanat, HDI), Heptandiisocyanate, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane ($H_6XDI$), 3-Isocyanatomethyl-3,5,5-trimethylcyclohexylisocyanat (Isophorondiisocyanat, IPDI), Bis-(4-isocyanatocyclohexyl)methan ($H_{12}MDI$), Bis-(isocyanatomethyl)norbornan (NBDI) oder 3(4)-Isocyanatomethyl-I-methyl-cyclohexylisocyanat (IMCI).

Besonders bevorzugte Isocyanate sind Hexamethylendiisocyanat (HDI), Trimethyl-HDI (TMDI), 2-Methylpentan-1,5-diisocyanat (MPDI), Isophorondiisocyanat (IPDI), 1,3- sowie 1,4-Bis(isocyanatomethyl)cyclohexan ($H_6XDI$), Bis(isocyanatomethyl)norbornan (NBDI), 3(4)-Isocyanatomethyl-1-methyl-cyclohexylisocyanat (IMCI) und/oder 4,4'-Bis(isocyanatocyclohexyl)methan ($H_{12}MDI$) oder Gemische dieser Isocyanate.

Stärker bevorzugt liegen die Polyisocyanate als Präpolymere, Biurete, Isocyanurate, Iminooxadiazindione, Uretdione und/oder Allophanate, hergestellt durch Umsetzung mit Polyolen oder Polyaminen, einzeln oder als Gemisch vor und haben eine mittlere Funktionalität von 1 oder größer, bevorzugt 2 oder größer.

Beispiele geeigneter, kommerziell erhältlicher Isocyanate sind Desmodur® N 3900, Desmodur® N 100, Desmodur® N 3200, Desmodur® N 3300, Desmodur® N 3600, Desmodur® N 3800, Desmodur® XP 2675, Desmodur® 2714, Desmodur® 2731, Desmodur® N 3400, Desmodur® XP 2580, Desmodur® XP 2679, Desmodur® XP 2731, Desmodur® XP 2489, Desmodur® E 305, Desmodur® E 3370, Desmodur® XP 2599, Desmodur® XP 2617, Desmodur® XP 2406, Desmodur® VL, Desmodur® VL 50, Desmodur® VL 51 (jeweils der Bayer MaterialScience AG), Tolonate

HDB, Tolonate HDT (Rhodia), Basonat HB 100 und Basonat HI 100 (BASF).

Die als gegenüber Isocyanatverbindungen reaktionsfähige Reaktivkomponente verwendbaren Amine umfassen alle Verbindungen mit mindestens zwei Aminogruppen, wobei die Aminogruppen primäre und/oder sekundäre Aminogruppen sind, die in der Lage sind, mit Isocyanatgruppen unter Bildung einer Harnstoffgruppe (-N-C(O)-N-) zu reagieren, wobei diese Verbindungen dem Fachmann bekannt sind.

In einer Ausführungsform der Erfindung ist die gegenüber Isocyanatverbindungen reaktionsfähige Reaktivkomponente ein Polyamin, wie z. B. 1,2-Diaminocyclohexan, 4,4'-Diaminodiphenylsulfon, 1,5-Diamino-2-methylpentan, Diethylentriamin, Hexamethylendiamin, Isophorondiamin, Triethylentetramin, Trimethylhexamethylendiamin und 5-Amino-1,3,3-trimethylcyclohexan-1-methylamin.

Diese Polyamine sind gegenüber Isocyanatgruppen hoch reaktiv, so dass die Reaktion zwischen der Aminogruppe und der Isocyanatgruppe innerhalb weniger Sekunden erfolgt.

Bevorzugt werden daher Verbindungen, die weniger schnell mit den Isocyanatgruppen reagieren, wie die sogenannten Polyetherpolyamine. Die Polyetherpolyamine, auch alkoxylierte Polyamine oder Polyoxyalkenpolyamine genannt, umfassen Verbindungen mit aliphatisch gebundenen Aminogruppen, d.h. die Aminogruppen sind an die Enden eines Polyethergerüstes angebunden. Das Polyethergerüst basiert auf reinen oder gemischten Polyalkylenoxideinheiten, wie Polyethylenglykol- (PEG), Polypropylenglykol- (PPG). Das Polyethergerüst ist durch Umsetzung eines Di- oder Trialkoholinitiators mit Ethylenoxid (EO) und/oder Propylenoxid (PO) und anschließender Umwandlung der terminalen Hydroxylgruppen zu Aminogruppen erhältlich.

Geeignete Polyetherpolyamine werden durch folgende allgemeine Formel (I) dargestellt

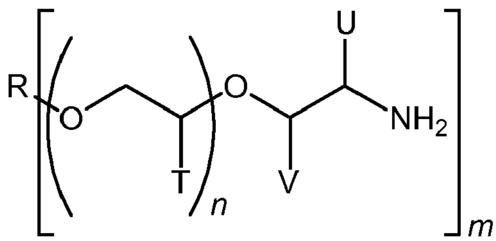

(I),

in der

| | |
|---|---|
| R | der Rest eines Initiators für die Oxyalkylierung ist mit 2 bis 12 Kohlenstoffatomen und 2 bis 8 Gruppen mit aktiven Wasserstoffatomen, |
| T | Wasserstoff oder eine $C_1$-$C_4$-Alkylgruppe darstellt, |
| V und U | unabhängig voneinander Wasserstoff oder T sind, |
| n | ein Wert zwischen 0 und 100 ist, |
| m | eine ganze Zahl zwischen 2 und 8 ist, wobei m der Anzahl der Gruppen mit einem aktiven Wasserstoffatom entspricht, die ursprünglich in dem Initiator für die Oxyalkylierung enthalten waren. |

In weiteren Ausführungsformen hat n einen Wert zwischen 35 und 100 oder weniger als 90, weniger als 80 und weniger als 70 oder weniger als 60. In einer weiteren Ausführungsform hat R 2 bis 6 oder 2 bis 4 oder 3 Gruppen mit aktiven Wasserstoffatomen, insbesondere Hydroxylgruppen. In einer anderen Ausführungsform ist R ein aliphatischer Initiator mit mehreren aktiven Wasserstoffatomen. In einer weiteren Ausführungsform sind T, U und V jeweils Methylgruppen.

In diesem Zusammenhang wird Bezug genommen auf das Patent US 4,940,770 und die Anmeldungen DE 26 09 488 A1 und WO 2012/030338 A1, deren Inhalte hiermit in diese Anmeldung aufgenommen werden.

Beispiele geeigneter Polyetheramine sind die von Huntsman Corporation unter der Marke JEFFAMINE® vertriebenen Polyetheramine der D-, ED-, EDR- und T- Serien, wobei die D-Serien Diamine und die T-Serie Triamine umfassen, die E-Serien Verbindungen umfassen, die ein Gerüst aufweisen, das im Wesentlichen aus Polyethylenglykol besteht, und die R-Serien hoch-reaktive Amine umfassen.

Die Produkte der D-Serien umfassen Amino-terminierte Polypropylenglykole der allgemeinen Formel (II),

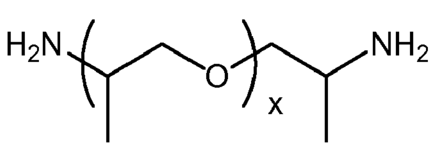

(II),

in der x eine Zahl mit einem Mittelwert zwischen 2 und 70 ist. Kommerziell erhältliche Produkte aus dieser Serie sind JEFFAMINE® D-230 (n ~ 2,5 / Mw 230), JEFFAMINE® D-400 (n - 6,1 / Mw = 430), JEFFAMINE® D-2000 (n - 33 / Mw 2.000) und JEFFAMINE® D-4000 (n - 68 / MW 4.000).

Die Produkte der ED-Serien umfassen Amino terminierte Polyether auf der Basis eines im Wesentlichen Polyethylenglykol-Gerüstes mit der allgemeinen Formel (III),

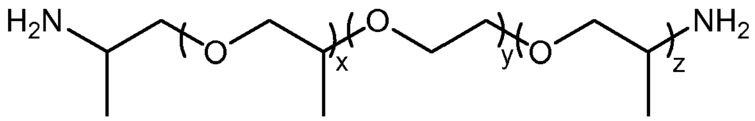

(III),

in der y eine Zahl mit einem Mittelwert zwischen 2 und 40 ist und x +z eine Zahl mit einem Mittelwert zwischen 1 und 6 ist. Kommerziell erhältliche Produkte aus dieser Serie sind: JEFFAMINE® HK511 (y = 2,0; x + z ~ 1,2 / Mw 220), JEFFAMINE® ED-600 (y ~ 9,0; x + z ~3,6 / Mw 600), JEFFAMINE® ED-900 (y ~ 12,5; x + z ~ 6,0 / Mw 900) und JEFFAMINE® ED-2003 (y ~ 39; x + z ~ 6,0 / Mw 2.000).

Die Produkte der EDR-Serien umfassen Amino terminierte Polyether mit der allgemeinen Formel (IV)

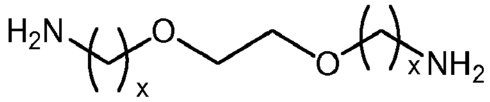

(IV),

in der x eine ganze Zahl zwischen 1 und 3 ist. Kommerziell erhältliche Produkte aus dieser Serie sind: JEFFAMINE® DER-148 (x = 2 / Mw 148) und JEFFAMINE® DER-176 (x = 3 / Mw 176).

Die Produkte der T-Serien umfassen Triamine, die durch Reaktion von Propylenoxid mit einem Triol-Initiator und anschließender Aminierung der terminalen Hydroxylgruppen erhalten werden und die allgemeine Formel (V) aufweisen oder Isomere davon

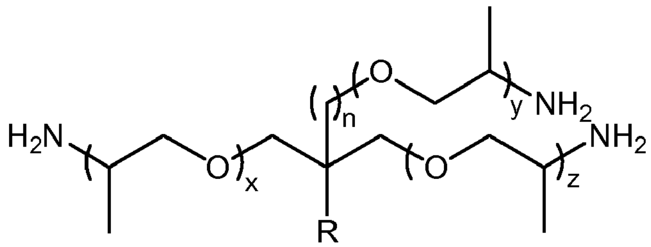

(V),

in der R Wasserstoff oder eine $C_1$-$C_4$-Alkylgruppe, bevorzugt Wasserstoff oder Ethyl ist, n 0 oder 1 ist und x + y + z die Anzahl der Mole an Propylenoxideinheiten entspricht, wobei x + y + z eine ganze Zahl zwischen etwa 4 und etwa 100, insbesondere zwischen etwa 5 und etwa 85 ist. Kommerziell erhältliche Produkte aus dieser Serie sind: JEFFAMINE® T-403 (R = $C_2H_5$; n = 1; x + y + z = 5-6 / Mw 440), JEFFAMINE® T-3000 (R = H; n = 0; x + y + z = 50 / Mw 3.000) und JEFFAMINE® T-5000 (R = H; n = 0; x + y + z = 85 / Mw 5.000).

Ferner sind die sekundären Amine der SD- und der ST-Serien geeignet, wobei die SD-Serien sekundäre Diamine und die ST-Serien sekundäre Triamine umfassen, die aus den obigen Serien durch reduktive Alkylierung der Aminogruppen erhalten werden, in dem die Amino-Endgruppen mit einem Keton, z.B. Aceton umgesetzt und anschließend reduziert werden, so dass sterisch gehinderte sekundäre Amino-Endgruppen mit der allgemeinen Formel (VI) erhalten werden

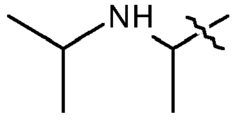

(VI).

Kommerziell erhältliche Produkte aus dieser Serie sind: JEFFAMINE® SD-231 (Ausgangsprodukt D230 / Mw 315), JEFFAMINE® SD-401 (Ausgangsprodukt D-400 / Mw 515), JEFFAMINE® SD-2001 (Ausgangsprodukt D-2000 / Mw 2050) und JEFFAMINE ST-404 (Ausgangsprodukt T-403 / Mw 565).

In einer besonders bevorzugten Ausführungsform der Erfindung werden als gegenüber Isocyanatverbindungen reaktionsfähige Reaktivkomponente Polyasparaginsäureester, die sogenannten Polyaspartics, verwendet, da deren

Reaktivität gegenüber Isocyanatgruppen verglichen mit den oben beschriebenen anderen Polyaminen deutlich reduziert ist. Dies führt zu dem Vorteil, dass die Verarbeitungszeit einer Zusammensetzung mit einem Isocyanat-Bestandteil und einem Polyasparaginsäureester-Bestandteil verlängert wird, was zu einer besseren Handhabbarkeit durch den Anwender führt.

Geeignete Polyasparaginsäureester sind unter Verbindungen der allgemeinen Formel (VII) ausgewählt,

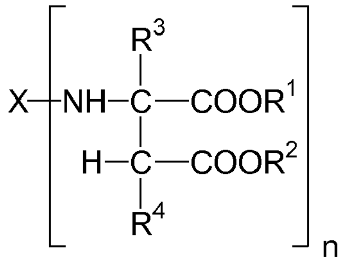

(VII),

in der $R^1$ und $R^2$ gleich oder verschieden sein können und für organische Reste stehen, die gegenüber Isocyanatgruppen inert sind, $R^3$ und $R^4$ gleich oder verschieden sein können und für Wasserstoff oder organische Reste stehen, die gegenüber Isocyanatgruppen inert sind, X für einen n-wertigen organischen Rest steht, der gegenüber Isocyanatgruppen inert ist, und n für eine ganze Zahl von mindestens 2, bevorzugt von 2 bis 6, mehr bevorzugt von 2 bis 4 und am meisten bevorzugt von 2 steht. $R^1$ und $R^2$ stehen bevorzugt unabhängig voneinander für eine, gegebenenfalls substituierte Kohlenwasserstoffgruppe, bevorzugt eine $C_1$-$C_9$-Kohlenwasserstoffgruppe und mehr bevorzugt eine Methyl-, Ethyl- oder Butylgruppe und $R^3$ und $R^4$ stehen bevorzugt jeweils für Wasserstoff.

In einer Ausführungsform steht X für eine n-wertige Kohlenwasserstoffgruppe, die durch Entfernen der Aminogruppen von einem aliphatischen oder araliphatischen Polyamin, bevorzugt durch Entfernen der primären Aminogruppen aus einem aliphatischen Polyamin, besonders bevorzugt Diamin erhalten wird. Der Begriff Polyamin umfasst in diesem Zusammenhang Verbindungen mit zwei oder mehreren primären und gegebenenfalls zusätzlichen sekundären Aminogruppen, wobei die primären Aminogruppen bevorzugt endständig sind.

In einer bevorzugten Ausführungsform steht X für einen Rest, wie er durch Entfernen der primären Aminogruppen aus 1,4-Diaminobutan, 1,6-Diaminohexan, 2,2,4- oder 2,4,4-Trimethyl-1,6-diaminohexan, 1-Amino-3,3,5-trimethyl-5-amionmethyl-cyclohexan, 4,4'-Diamino-dicyclohexylmethan oder 3,3'-Dimethyl-4,4'-diamino-dicyclohexylmethan, Diethylentriamin und Triethylentetramin erhalten wird und wobei n in Formel (VII) für die Zahl 2 steht.

In diesem Zusammenhang wird Bezug genommen auf die Anmeldung EP 0 403 921 A2 und EP 0 743 332 A1, deren Inhalte hiermit in diese Anmeldung aufgenommen werden.

Gemische von Polyasparaginsäureestern können ebenfalls verwendet werden.

Beispiele geeigneter Polyasparaginsäureester werden von Bayer MaterialScience AG unter der Marke DESMOPHEN® vertrieben. Kommerziell erhältliche Produkte sind beispielsweise: DESMOPHEN® NH 1220, DESMOPHEN® NH 1420 und DESMOPHEN® NH 1520.

Die beschriebenen gegenüber Isocyanatverbindungen reaktionsfähigen Reaktivkomponenten können je nach gewünschter Reaktivität einzeln oder als Gemisch verwendet werden. Dabei können insbesondere die Polyamine als verbrückende Verbindungen dienen, wenn diese zusätzlich zu den Polyetherpolyaminen oder den Polyasparaginsäureestern verwendet werden.

Die Mengenverhältnisse der Bestandteile A und B werden bevorzugt so gewählt, dass das Äquivalentverhältnis von Isocyanatgruppen der Isocyanatverbindung zu gegenüber der Isocyanatgruppe reaktionsfähigen Gruppen der gegenüber Isocyanatverbindungen reaktionsfähigen Reaktivkomponente zwischen 0,3 und 1,7, bevorzugt zwischen 0,5 und 1,5 und stärker bevorzugt zwischen 0,7 und 1,3 liegt.

Überraschend hat sich herausgestellt, dass die Intumeszenzeigenschaften der erfindungsgemäßen Zusammensetzung verbessert werden können, d.h. der Intumeszenzfaktor erhöht werden kann, wenn der Vernetzungsgrad des Produkts der Umsetzung aus dem Polyasparaginsäureester und dem Polyisocyanat verringert wird oder der erfindungsgemäßen Zusammensetzung als zusätzlicher Bestandteil mindestens ein Polyol, das mit der Isocyanatverbindung unter Bildung einer Urethangruppe reagieren kann, zugegeben wird. Damit wird es möglich, durch geeignete Auswahl an Polyolen die Intumeszenzeigenschaften der Zusammensetzung gezielt einzustellen. Überraschend war ferner, dass sich die Aschekrustenstabilität durch die Zugabe eines Polyols kaum veränderte.

Bevorzugt wird das Polyol mit dem Polyamin, Polyetheramin oder Polyasparaginsäureester im Verhältnis OH:NH 0,05 eq : 0,95 eq bis 0,6 eq : 0,4 eq, stärker bevorzugt im Verhältnis 0,1 eq : 0,9 eq bis 0,5 eq : 0,5 eq und am stärksten bevorzugt im Verhältnis 0,2 eq : 0,8 eq bis 0,4 eq : 0,6 eq eingesetzt.

Bevorzugt ist das Polyol aufgebaut aus einem Grundgerüst aus Polyester, Polyether, Polyurethan und/oder Alkanen oder Mischungen aus diesen mit einer oder mehrerer Hydroxylgruppen. Das Grundgerüst kann linear oder

verzweigt aufgebaut sein und die funktionellen Hydroxylgruppen terminal und/oder entlang der Kette enthalten.

Stärker bevorzugt sind die Polyesterpolyole ausgewählt aus Kondensationsprodukten von Di- und Polycarbonsäuren, z.B. aromatische Säuren wie Phthalsäure und Isophthalsäure, aliphatische Säuren wie Adipinsäure und Maleinsäure, cycloaliphatischen Säuren, wie Tetrahydrophthalsäure und Hexahydrophthalsäure, und/oder deren Derivaten, wie Anhydride, Ester oder Chloride, und einer überschüssigen Menge aus mehrfachfunktionellen Alkoholen, z.B. aliphatische Alkohole wie Ethandiol, 1,2-Propandiol, 1,6-Hexandiol, Neopentylglykol, Glycerin, Trimethylolpropan und cycloaliphatische Alkohole wie 1,4-Cyclohexandimethanol.

Weiterhin sind die Polyesterpolyole ausgewählt aus Polyacrylatpolyolen, wie Copolymerisate von Estern der Acryl- und/ oder Methacrylsäure, wie z.B. Ethylacrylat, Butylacrylat, Methylmethacrylat mit zusätzlichen Hydroxylgruppen, und Styrol, Vinylester und Maleinsäureester. Die Hydroxylgruppen in diesen Polymeren werden über funktionalisierte Ester der Acryl- und Methacrylsäure, z.B. Hydroxyethylacrylat, Hydroxyethylmethacrylat und/ oder Hydroxypropylmethacrylat eingeführt.

Weiterhin sind die Polyesterpolyole ausgewählt aus Polycarbonatpolyolen. Verwendbare Polycarbonatpolyole sind Hydroxylgruppen aufweisende Polycarbonate, zum Beispiel Polycarbonatdiole. Diese sind durch Reaktion von Kohlensäure oder Kohlensäurederivaten mit Polyolen oder durch die Copolymerisation von Alkylenoxiden, wie zum Beispiel Propylenoxid, mit $CO_2$ erhältlich. Zusätzlich oder alternativ sind die eingesetzten Polycarbonate aus linearen aliphatischen Ketten aufgebaut. Geeignete Kohlensäurederivate sind etwa Kohlensäurediester, wie z.B. Diphenylcarbonat, Dimethylcarbonat oder Phosgen. Geeignete Polyole sind etwa Diole, wie Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Weiterhin sind die Polyesterpolyole ausgewählt aus Polycaprolactonpolyolen, hergestellt durch ringöffnende Polymerisation von ε-Caprolacton mit mehrfachfunktionellen Alkoholen, wie Ethylenglykol, 1,2-Propandiol, Glycerin und Trimethylolpropan.

Stärker bevorzugt sind außerdem Polyetherpolyole ausgewählt aus Additionsprodukten von z.B. Ethylen- und/oder Propylenoxid und mehrfachfunktionellen Alkoholen wie z.B. Ethylenglykol, 1,2-Propandiol, Glycerin und/oder Trimethylolpropan.

Stärker bevorzugt sind außerdem Polyurethanpolyole, hergestellt aus Polyaddition von Diisocyanaten mit überschüssigen Mengen Di- und/oder Polyolen.

Stärker bevorzugt sind außerdem di- oder mehrfunktionelle Alkohole, ausgewählt aus $C_2$-$C_{10}$-Alkoholen mit den Hydroxylgruppen an den Enden und/oder entlang der Kette.

Am stärksten bevorzugt sind oben genannte Polyesterpolyole, Polyetherpolyole und $C_2$-$C_{10}$-Alkohole, die di- und/oder trifunktionell sind.

Beispiele geeigneter Polyesterpolyole umfassen DESMOPHEN® 1100, DESMOPHEN® 1652, DESMOPHEN® 1700, DESMOPHEN® 1800, DESMOPHEN® 670, DESMOPHEN® 800, DESMOPHEN® 850, DESMOPHEN® VP LS 2089, DESMOPHEN® VP LS 2249/1, DESMOPHEN® VP LS 2328, DESMOPHEN® VP LS 2388, DESMOPHEN® XP 2488 (Bayer), K-FLEX XM-360, K-FLEX 188, K-FLEX XM-359, K-FLEX A308 und K-FLEX XM-332 (King Industries).

Beispiele geeigneter kommerziell erhältlicher Polyetherpolyole umfassen: ACCLAIM® POLYOL 12200 N, ACCLAIM® POLYOL 18200 N, ACCLAIM® POLYOL 4200, ACCLAIM® POLYOL 6300, ACCLAIM® POLYOL 8200 N, ARCOL® POLYOL 1070, ARCOL® POLYOL 1105 S, DESMOPHEN® 1110 BD, DESMOPHEN® 1111 BD, DESMOPHEN® 1262 BD, DESMOPHEN® 1380 BT, DESMOPHEN® 1381 BT, DESMOPHEN® 1400 BT, DESMOPHEN® 2060 BD, DESMOPHEN® 2061 BD, DESMOPHEN® 2062 BD, DESMOPHEN® 3061 BT, DESMOPHEN® 4011 T, DESMOPHEN® 4028 BD, DESMOPHEN® 4050 E, DESMOPHEN® 5031 BT, DESMOPHEN® 5034 BT und DESMOPHEN® 5035 BT (Bayer) oder Mischungen aus Polyester- und Polyetherpolyolen wie WorléePol 230 (Worlée).

Beispiele geeigneter Alkanole umfassen Ethandiol, Propandiol, Propantriol, Butandiol, Butantriol, Pentandiol, Pentantriol, Hexandiol, Hexantriol, Heptandiol; Heptantriol, Octandiol, Octantriol, Nonandiol, Nonantriol, Decandiol und Decantriol.

Für den Fall, dass die Zusammensetzung für die gedachte Anwendung zu langsam aushärtet, insbesondere wenn Polyasparaginsäureester verwendet werden, kann der Zusammensetzung ferner ein tertiäres Amin als Katalysator zugegeben werden.

Enthält die Zusammensetzung ferner Polyole kann für den Fall, dass die Zusammensetzung für die gedachte Anwendung zu langsam aushärtet, der Zusammensetzung ferner ein Katalysator zugegeben werden, welcher unter zinnhaltigen Verbindungen, bismuthaltigen Verbindungen, einer zirkoniumhaltigen Verbindungen, aluminiumhaltigen Verbindungen oder zinkhaltigen Verbindungen ausgewählt ist. Bevorzugt handelt es sich hierbei um Zinnoctoat, Zinnoxalat, Zinnchlorid, Dioctylzinndi-(2-ethylhexanoat), Dioctylzinndithioglykolat, Dibutylzinndilaurat, Monobutylzinntris-(2-ethylhexanoat), Dioctylzinndineodecanoat, Dibutylzinndineodecanoat, Dibutylzinndiacetat, Dibutylzinnoxid, Monobutylzinndihydroxychlorid, Organozinnoxid, Monobutylzinnoxid, Dioctylzinndicarboxylat, Dioctylzinnstannoxan, Bismutcarboxylat, Bismutoxid, bismutneodecanoat, Zinkneodecanoat, Zinkoctoat, Zinkacetylacetonat, Zinkoxalat, Zinkacetat, Zinkcarboxylat, Aluminiumchelatkomplex, Zirkoniumchelatkomplex, Dimethylaminopropylamine, *N*,*N*-Dimethylcyclohexylamin, N,N-Dimethylethanolamin, N-(3-Dimethylaminopropyl)-*N*,*N*-diisopropanolamin, *N*-Ethylmorpholin, *N*-Methylmorpholin, Pentamethyldiethylentriamin und/oder Triethylendiamin.

Beispiele geeigneter Katalysatoren sind Borchi® Kat 24, Borchi® Kat 320, Borchi® Kat 15 (Borchers), TIB KAT 129, TIB KAT P129, TIB KAT 160, TIB KAT 162, TIB KAT 214, TIB KAT 216, TIB KAT 218, TIB KAT 220, TIB KAT 232, TIB KAT 248, TIB KAT 248 LC, TIB KAT 250, TIB KAT 250, TIB KAT 256, TIB KAT 318, TIB Si 2000, TIB KAT 716, TIB KAT 718, TIB KAT 720, TIB KAT 616, TIB KAT 620, TIB KAT 634, TIB KAT 635, TIB KAT 815 (TIB Chemicals), K-KAT® XC-B221, K-KAT® 348, K-KAT® 4205, K-KAT® 5218, K-KAT® XK-635, K-KAT® XK-639, K-KAT® XK-604, K-KAT® XK-618 (King Industries), JEFFCAT® DMAPA, JEFFCAT®DMCHA, JEFFCAT® DMEA, JEFFCAT® DPA, JEFFCAT® NEM, JEFFCAT® NMM, JEFFCAT® PMDETA, JEFFCAT® TD-100 (Huntsman) und DABCO 33LV (Sigma Aldrich).

Erfindungsgemäß enthält der Bestandteil C ein dämmschichtbildendes Additiv, wobei das Additiv sowohl einzelne Verbindungen als auch ein Gemisch von mehreren Verbindungen umfassen kann.

Zweckmäßig werden als dämmschichtbildende Additive solche eingesetzt, die unter Hitzeeinwirkung eine sich aufblähende, isolierende Schicht aus schwerentflammbaren Material bilden. Diese Schicht schützt das Substrat vor Überhitzung und verhindert oder verzögert zumindest dadurch die Veränderung der mechanischen und statischen Eigenschaften tragender Bauteile durch Hitzeeinwirkung. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemisches intumeszierende System bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls des erweichten Bindemittels unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Treibmittel, und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide, Oligosaccharide und Polysaccharide, und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)-Polyole. Bevorzugt werden Pentaerythrit, Dipentaerythrit oder Polyvinylacetat eingesetzt. Es sei erwähnt, dass das Bindemittel im Brandfall selbst auch die Funktion eines Kohlenstofflieferanten haben kann.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Treibmittel kommen die üblicherweise in Brandschutzformulierungen verwendeten und dem Fachmann bekannten Verbindungen in Betracht, wie Cyanursäure oder Isocyansäure und deren Derivate, Melamin und deren Derivate. Solche sind: Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränken, wie Melaminpolyphosphat, das sowohl als Säurebildner als auch als Treibmittel wirkt. Weitere Beispiele sind in der GB 2 007 689 A1, EP 139 401 A1 und US 3 969 291 A1 beschrieben.

In einer Ausführungsform der Erfindung, in der die isolierende Schicht zusätzlich zu der chemischen Intumeszenz durch physikalische Intumeszenz gebildet wird, umfasst das dämmschichtbildende Additiv ferner mindestens eine thermisch expandierbare Verbindung, wie eine Graphit-Interkallationsverbindung, die auch als Blähgraphit bekannt sind. Diese können ebenfalls ins Bindemittel eingebunden werden.

Als Blähgraphit kommen beispielsweise bekannte Einlagerungsverbindungen von $SO_x$, $NO_x$, Halogen und/oder Säuren in Graphit in Frage. Diese werden auch als Graphitsalze bezeichnet. Bevorzugt sind Blähgraphite, die bei Temperaturen von beispielsweise 120 bis 350°C unter Aufblähen $SO_2$, $SO_3$, NO und/oder $NO_2$ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in der erfindungsgemäßen Zusammensetzung gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

Da die im Brandfall gebildete Aschekruste in manchen Fällen zu instabil ist und daher abhängig von deren Dichte und Struktur etwa durch Luftströmungen verblasen werden kann, was sich negativ auf die isolierende Wirkung der Beschichtung auswirkt, kann zu den eben aufgeführten Komponenten mindestens ein Aschekrustenstabilisator gegeben werden.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von $\leq 50\ \mu m$, vorzugsweise von 0,5 bis 10 $\mu m$ besitzt. Im Fall der Verwendung des teilchenförmigen Metalls in Form von Fasern, Fäden und/oder Whiskers ist eine Dicke von 0,5 bis 10 $\mu m$ und eine Länge von 10 bis 50 $\mu m$ bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929 oder E.D. Weil, S. V. Levchik (Hrsg.), Flame Retardants for Plastic and Textiles - Practical Applications, Hanser, 2009.

Das dämmschichtbildende Additiv kann in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil des Bestandteils C in der Gesamtformulierung so hoch wie möglich eingestellt. Bevorzugt beträgt der Anteil des Bestandteils C in der Gesamtformulierung 35 bis 85 Gew.-% und besonders bevorzugt 40 bis 85 Gew.-%.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten,

Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU-und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder Mehrkomponenten-System konfektioniert werden.

Da eine Reaktion bei Raumtemperatur eintritt, müssen der Bestandteil A und der Bestandteil B reaktionsinhibierend getrennt angeordnet werden. In Anwesenheit eines Katalysators kann dieser entweder getrennt von den Bestandteilen A und B gelagert werden oder kann in einem dieser Bestandteile oder aufgeteilt auf beide Bestandteile enthalten sein. Hierdurch wird erreicht, dass die beiden Komponenten A und B des Bindemittels erst unmittelbar vor der Anwendung miteinander gemischt werden und die Härtungsreaktion auslösen. Dies macht das System einfacher in der Handhabung.

In einer bevorzugten Ausführungsform der Erfindung ist die erfindungsgemäße Zusammensetzung als Zweikomponenten-System konfektioniert, wobei der Bestandteil A und der Bestandteil B reaktionsinhibierend getrennt angeordnet sind. Dementsprechend enthält eine erste Komponente, die Komponente I, den Bestandteil A und eine zweite Komponente, die Komponente II, den Bestandteil B. Hierdurch wird erreicht, dass die beiden Bestandteile A und B des Bindemittels erst unmittelbar vor der Anwendung miteinander gemischt werden und die Härtungsreaktion auslösen. Dies macht das System einfacher in der Handhabung.

Der Bestandteil C kann dabei als Gesamtmischung oder in Einzelkomponenten aufgeteilt in einer ersten Komponente I und/oder einer zweiten Komponente II enthalten sein. Die Aufteilung des Bestandteils C erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung.

Die Zusammensetzung wird als Paste mit einem Pinsel, einer Rolle oder durch Sprühen auf das Substrat, insbesondere metallische Substrat aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Additionsreaktion und damit nicht notwendige Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen wie dem Ammoniumpolyphosphat führen kann, bzw. bei der Aufnahme von Staub zu einer reduzierten Intumeszenz. Durch die geringe Viskosität der Zusammensetzung trotz des hohen Feststoffanteils bleibt die Zusammensetzung einfach zu verarbeiten, insbesondere durch gängige Sprühverfahren. Aufgrund des niedrigen Erweichungspunktes des Bindemittels und des hohen Feststoffanteils, ist selbst bei geringer Schichtdicke die Expansionsrate bei Hitzeeinwirkung hoch.

Darüber hinaus weist eine getrocknete Schicht der erfindungsgemäßen Zusammensetzung eine sehr hohe Wasserfestigkeit auch gegenüber Salzwasser verglichen mit üblichen wasserbasierten oder lösemittelbasierten Systemen auf.

Deshalb ist die erfindungsgemäße Zusammensetzung als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung.

Die vorliegende Erfindung betrifft auch Objekte, die erhalten werden, wenn die erfindungsgemäße Zusammensetzung ausgehärtet ist. Die Objekte haben ausgezeichnete dämmschichtbildende Eigenschaften.

Die folgenden Beispiele dienen der weiteren Erläuterung der Erfindung.

**AUSFÜHRUNGSBEISPIELE**

Für die Herstellung von erfindungsgemäßen dämmschichtbildenden Zusammensetzungen werden wie nachfolgend angegeben die Einzelkomponenten mit Hilfe eines Dissolvers vermengt und homogenisiert

Es wurden jeweils das Aushärteverhalten beobachtet, anschließend der Intumeszenzfaktor und die relative Aschekrustenstabilität bestimmt. Hierzu wurde die Massen jeweils in eine runde Teflon-Form mit etwa 2 mm Tiefe und 48 mm Durchmesser gegeben.

Die Zeit für die Aushärtung entspricht dabei der Zeit, nach der die Proben durchgehärtet waren und der Teflon-Form entnommen werden konnten.

Zur Bestimmung des Intumeszenzfaktors und der relativen Aschekrustenstabilität wurde ein Muffelofen auf 600°C vorgeheizt. Es wurde eine Mehrfachmessung der Probendicke mit der Schieblehre durchgeführt und der Mittelwert $h_M$ berechnet. Dann wurden die Proben jeweils in eine zylindrische Stahlform eingebracht und für 30 min im Muffelofen erhitzt. Nach Abkühlen auf Raumtemperatur wurde die Schaumhöhe $h_{E1}$ zunächst zerstörungsfrei bestimmt (Mittelwert einer Mehrfachmessung). Der Intumeszenzfaktor / berechnet sich wie folgt:

$$\text{Intumeszenzfaktor I:} \qquad I = h_{E1} : h_M$$

Anschließend ließ man in der zylindrischen Stahlform ein definiertes Gewicht (m = 105 g) aus einer definierten Höhe (h = 100 mm) auf den Schaum fallen und bestimmte die nach dieser teilweise zerstörenden Einwirkung verbleibende Schaumhöhe $h_{E2}$. Die relative Aschekrustenstabilität wurde wie folgt berechnet:

$$\text{relative Aschekrustenstabilität (AKS):} \quad AKS = h_{E2} : h_{E1}$$

Bei den folgenden Beispielen wurde als Bestandteil C folgende Zusammensetzung verwendet:

*Bestandteil C:*

| **Bestandteil** | **Menge [g]** |
|---|---|
| Pentaerythrit | 8,7 |
| Melamin | 8,7 |
| Ammoniumpolyphosphat | 16,6 |
| Titandioxid | 7,9 |

**Vergleichsbeispiel 1**

*Bestandteil A*

| **Verbindungen** | **Menge [g]** |
|---|---|
| Desmophen 1150 | 100,0 |

*Bestandteil B*

| **Verbindungen** | **Menge [g]** |
|---|---|
| Desmodur VL | 45,0 |

*Bestandteil C*

| **Verbindungen** | **Menge [g]** |
|---|---|
| wie oben angegeben | 163,0 |

**Vergleichsbeispiel 2**

Als Vergleich diente ein auf wässriger Dispersionstechnologie basiertes kommerzielles Brandschutzprodukt (Hilti CFP S-WB).

**Vergleichsbeispiel 3**

Als weiter Vergleich diente ein Standard-Epoxy-Amin-System (Jeffamin® T-403, flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH) und 1,6-Hexandioldiglycidylether), das zu 60 % mit einem Intumeszenzgemisch analog den obigen Beispielen gefüllt ist, getestet.

**Vergleichsbeispiel 4**

Als weiter Vergleich diente ein Standard-Epoxy-Amin-System (Isophorondiamin, Trimethylolpropantriacrylat und flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH)), das zu 60 % mit einem Intumeszenzgemisch analog den obigen Beispielen gefüllt ist, getestet.

**Beispiel 1**

*Bestandteil A*

| **Verbindungen** | **Menge [g]** |
|---|---|
| Asparaginsäureester [1] | 12,9 |
| DESMOPHEN® 1150 | 5,4 |

*Bestandteil B*

| **Verbindungen** | **Menge [g]** |
|---|---|
| DESMODUR® N 3600 | 11,9 |

*Bestandteil C*

| **Verbindungen** | **Menge [g]** |
|---|---|
| wie oben angegeben | 45,0 |

**Beispiel 2**

*Bestandteil A*

| Verbindungen | Menge [g] |
|---|---|
| DESMOPHEN® NH 1520 | 8,3 |
| DESMOPHEN® 1150 | 10,3 |

*Bestandteil B*

| Verbindungen | Menge [g] |
|---|---|
| Desmodur N 3600 | 11,5 |

*Bestandteil C*

| Verbindungen | Menge [g] |
|---|---|
| wie oben angegeben | 45,0 |

**Beispiel 3**

*Bestandteil A*

| Verbindungen | Menge [g] |
|---|---|
| DESMOPHEN® NH 1420 | 20,51 |

*Bestandteil B*

| Verbindungen | Menge [g] |
|---|---|
| Desmodur N 3600 | 9,6 |

*Bestandteil C*

| Verbindungen | Menge [g] |
|---|---|
| wie oben angegeben | 45,0 |

**Beispiel 4**

*Bestandteil A*

| Verbindungen | Menge [g] |
|---|---|
| DESMOPHEN® 1520 | 20,8 |

*Bestandteil B*

| Verbindungen | Menge [g] |
|---|---|
| Desmodur N 3600 | 9,2 |

*Bestandteil C*

| Verbindungen | Menge [g] |
|---|---|
| wie oben angegeben | 45,0 |

Aus den in Tabelle 1 dargestellten Ergebnissen wird deutlich, dass die Aushärtung der erfindungsgemäßen Zusammensetzungen schneller erfolgt, Vergleichszusammensetzung.

**Tabelle 1:** Ergebnisse der Messungen der Aushärtezeit

| Beispiel | Probendicke $h_A$ (mm) | Aushärtezeit |
|---|---|---|
| 1 | 5 | 15 Stunden |
| 2 | 5 | 1 Tag |
| 3 | 5 | 3 Stunden |
| 4 | 5 | 15 Stunden |
| Vergleichsbeispiel 2 | 2 | 10 Tage |

**Tabelle 2:** Ergebnisse der Messungen des Intumeszenzfaktors und der Aschekrustenstabilität

| Beispiel | Intumeszenzfaktor I (Vielfaches) | relative Aschekrustenstabilität AKS (Vielfaches) | Probendicke $h_M$ (mm) |
|---|---|---|---|
| 1 | 14 | 0,88 | 1,15 |
| 2 | 11 | 0,71 | 1,27 |
| 3 | 5 | 0,83 | 5,6 |
| 4 | 9 | 0,67 | 1,4 |
| Vergleichsbeispiel 1 | Probe wird zersetzt, keine Intumeszenz | | 1,4 |
| Vergleichsbeispiel 3 | 22 | 0,04 | 1,6 |
| Vergleichsbeispiel 4 | 1,7 | 0,60 | 1,2 |

## Patentansprüche

1. Dämmschichtbildende Zusammensetzung mit einem Bestandteil A, der eine Isocyanatverbindung enthält, mit einem Bestandteil B, der eine gegenüber Isocyanatverbindungen reaktionsfähige Reaktivkomponente enthält, die unter Verbindungen mit mindestens zwei Aminogruppen ausgewählt ist, wobei die Aminogruppen unabhängig voneinander primäre und/oder sekundäre Aminogruppen sind, und mit einem Bestandteil C, der ein dämmschichtbildendes Additiv enthält, wobei das dämmschichtbildende Additiv ein Gemisch, das gegebenenfalls mindestens einen Kohlenstofflieferant, mindestens einen Dehydrierungskatalysator und mindestens ein Treibmittel enthält, umfasst.

2. Dämmschichtbildende Zusammensetzung nach Anspruch 1, wobei die gegenüber Isocyanatverbindungen reaktionsfähige Reaktivkomponente unter Polyaminen, Polyetherpolyaminen und Polyasparaginsäureestern oder einem Gemisch davon ausgewählt ist.

3. Dämmschichtbildende Zusammensetzung nach Anspruch 2, wobei die gegenüber Isocyanatverbindungen reaktionsfähige Reaktivkomponente ein Polyetherpolyamin ist, welches unter Verbindungen der allgemeinen Formeln (I)

ausgewählt ist

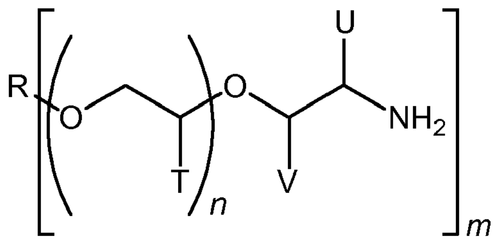

(I),

in der

R der Rest eines Initiators für die Oxyalkylierung ist mit 2 bis 12 Kohlenstoffatomen und 2 bis 8 Gruppen mit aktiven Wasserstoffatomen,
T Wasserstoff oder eine $C_1$-$C_4$-Alkylgruppe darstellt,
V und U unabhängig voneinander Wasserstoff oder T sind,
n ein Wert zwischen 0 und 100 ist,
m eine ganze Zahl zwischen 2 und 8 ist, wobei m der Anzahl der Gruppen mit einem aktiven Wasserstoffatom entspricht, die ursprünglich in dem Initiator für die Oxyalkylierung enthalten waren.

**4.** Dämmschichtbildende Zusammensetzung nach Anspruch 2, wobei die gegenüber Isocyanatverbindungen reaktionsfähige Reaktivkomponente ein Polyasparaginsäureester der allgemeinen Formel (VII) ist,

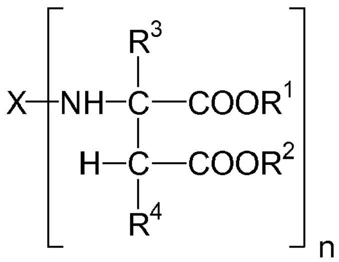

(VII),

in der

$R^1$ und $R^2$ gleich oder verschieden sein können und für organische Reste stehen, die gegenüber Isocyanatgruppen inert sind,
$R^3$ und $R^4$ gleich oder verschieden sein können und für Wasserstoff oder organische Reste stehen, die gegenüber Isocyanatgruppen inert sind,
X für einen n-wertigen organischen Rest steht, der gegenüber Isocyanatgruppen inert ist, und
n für eine ganze Zahl von mindestens 2 steht.

**5.** Dämmschichtbildende Zusammensetzung nach Anspruch 4, wobei in Formel (VII) $R^1$ und $R^2$ unabhängig voneinander für eine Methyl- oder Ethylgruppe und $R^3$ und $R^4$ jeweils für Wasserstoff stehen.

**6.** Dämmschichtbildende Zusammensetzung nach Anspruch 4 oder 5, wobei in Formel (VII) X für einen Rest steht, wie er durch Entfernung der primären Aminogruppen aus einem aliphatischen Polyamin erhalten wird.

**7.** Dämmschichtbildende Zusammensetzung nach Anspruch 6, wobei X für einen Rest steht, wie er durch Entfernung der primären Aminogruppen aus 1,4-Diaminobutan, 1,6-Diaminohexan, 2,2,4- oder 2,4,4-Trimethyl-1,6-diaminohexan, 1-Amino-3,3,5-trimethyl-5-amionmethyl-cyclohexan, 4,4'-Diamino-dicyclohexylmethan oder 3,3'-Dimethyl-4,4'-diamino-dicyclohexylmethan, Diethylentriamin und Triethylentetramin erhalten wird und n für die Zahl 2 steht.

**8.** Dämmschichtbildende Zusammensetzung nach einem der vorhergehenden Ansprüche, wobei der Bestandteil B ferner eine Polyolverbindung enthält.

**9.** Dämmschichtbildende Zusammensetzung nach Anspruch 8, wobei die Polyolverbindung unter Polyesterpolyolen,

Polyetherpolyolen, hydroxylierten Polyurethanen und/oder Alkanen mit jeweils mindestens zwei Hydroxylgruppen pro Molekül ausgewählt ist.

**10.** Dämmschichtbildende Zusammensetzung nach Anspruch 9, wobei die Polyolverbindung aus Verbindungen ausgewählt ist, die ein Grundgerüst aus Polyester, Polyether, Polyurethan und/oder Alkanen oder Mischungen aus diesen und eine oder mehrere Hydroxylgruppen umfassen.

**11.** Dämmschichtbildende Zusammensetzung nach einem der vorhergehenden Ansprüche, wobei die Isocyanatverbindung ein aliphatisches oder aromatisches Grundgerüst und mindestens zwei Isocyanatgruppen oder ein Gemisch davon umfasst.

**12.** Dämmschichtbildende Zusammensetzung nach einem der vorhergehenden Ansprüche, wobei die Mengenverhältnisse der Bestandteile A und B so gewählt sind, dass das Äquivalentverhältnis von Isocyanatgruppen der Isocyanatverbindung zu gegenüber der Isocyanatgruppe reaktionsfähigen Gruppen der gegenüber Isocyanatverbindungen reaktionsfähigen Reaktivkomponente zwischen 0,3 und 1,7 liegt.

**13.** Zusammensetzung nach einem der vorhergehenden Ansprüche, die ferner einen Katalysator für die Reaktion zwischen der Isocyanatverbindung und der gegenüber Isocyanatverbindungen reaktionsfähigen Reaktivkomponente und/oder dem Polyol enthält.

**14.** Zusammensetzung nach einem der vorhergehenden Ansprüche, wobei das dämmschichtbildende Additiv ferner mindestens eine thermisch expandierbare Verbindung umfasst.

**15.** Zusammensetzung nach Anspruch 14, wobei das dämmschichtbildende Additiv ferner einen Aschekrustenstabilisator enthält.

**16.** Zusammensetzung nach einem der vorhergehenden Ansprüche, wobei die Zusammensetzung ferner organische und/oder anorganische Zuschlagstoffe und/oder weitere Additive enthält.

**17.** Zusammensetzung nach einem der vorhergehenden Ansprüche, die als Zwei- oder Mehrkomponenten-System konfektioniert ist.

**18.** Zusammensetzung nach Anspruch 17, wobei die Zusammensetzung als Zweikomponentensystem konfektioniert ist und der Bestandteil A und der Bestandteil B reaktionsinhibierend auf zwei Komponenten, Komponente I und Komponente II, aufgeteilt sind.

**19.** Zusammensetzung nach Anspruch 18, wobei der Bestandteil C, der gegebenenfalls mindestens einen Kohlenstofflieferant, mindestens ein Treibmittel und mindestens einen Dehydrierungskatalysator umfasst, derart auf die Komponente I und die Komponente II aufgeteilt ist, dass diese Verbindungen reaktionsinhibierend getrennt voneinander sind.

**20.** Zusammensetzung nach Anspruch 19, wobei der Bestandteil C ferner einen Aschekrustenstabilisator enthält, der derart auf die Komponente I und die Komponente II aufgeteilt ist, dass die Komponente I oder die Komponente II zumindest einen Teil des Aschekrustenstabilisators enthält und die Komponente II oder die Komponente I gegebenenfalls einen weiteren Teil des Aschekrustenstabilisators enthält.

**21.** Verwendung der Zusammensetzung nach einem der Ansprüche 1 bis 20 als Beschichtung.

**22.** Verwendung nach Anspruch 21 für die Beschichtung von Stahlkonstruktionselementen.

**23.** Verwendung nach Anspruch 21 für die Beschichtung von metallischen und/oder nicht metallischen Substraten.

**24.** Verwendung nach einem der Ansprüche 21 bis 23 als Brandschutzschicht.

**25.** Gehärtete Objekte, erhalten durch Härten der Zusammensetzung nach einem der Ansprüche 1 bis 20.

Europäisches Patentamt
European Patent Office
Office européen des brevets

**EUROPÄISCHER RECHERCHENBERICHT**

Nummer der Anmeldung
EP 13 17 0748

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 984 360 A (GALBREATH DENNIS E ET AL) 5. Oktober 1976 (1976-10-05)<br>* Beispiele III,IV *<br>----- | 1-3, 8-13, 16-19,25 | INV.<br>C08G18/50<br>C08G18/64<br>C09K3/32<br>C08J9/00<br>C08K3/00<br>C08G18/32<br>C08G18/38 |
| X | WO 2012/126742 A1 (BASF SE [DE]; FRICKE MARC [DE]; ELBING MARK [DE]) 27. September 2012 (2012-09-27)<br>* Beispiel 1 *<br>----- | 1,2,11, 17,21,25 | |
| A | EP 1 142 964 A2 (CLARIANT GMBH [DE] CLARIANT PRODUKTE DEUTSCHLAND [DE]) 10. Oktober 2001 (2001-10-10)<br>* Absätze [0001], [0005], [0006]; Beispiel 5 *<br>----- | 1-25 | |
| A | EP 0 477 840 A1 (PPG INDUSTRIES INC [US] PPG IND OHIO INC [US]) 1. April 1992 (1992-04-01)<br>* Seite 1, Zeilen 16-19; Beispiel 2 *<br>----- | 1-25 | RECHERCHIERTE SACHGEBIETE (IPC) |
| A | DE 10 2011 116960 B3 (STAHLBRANDSCHUTZ GMBH [DE]) 25. Oktober 2012 (2012-10-25)<br>* Absatz [0001]; Beispiele 1-2 *<br>----- | 1-25 | C08G<br>C09K<br>C08J<br>C08K |
| A | DE 10 2006 025670 A1 (INTUMEX GMBH [AT]) 14. Dezember 2006 (2006-12-14)<br>* Ansprüche 4,8 *<br>----- | 1-25 | |
| A | US 5 126 170 A (ZWIENER CHRISTIAN [DE] ET AL) 30. Juni 1992 (1992-06-30)<br>* Spalte 1, Zeilen 6-11; Beispiel 1 *<br>----- | 1-25 | |

Der vorliegende Recherchenbericht wurde für alle Patentansprüche erstellt

1

| Recherchenort | Abschlußdatum der Recherche | Prüfer |
|---|---|---|
| Den Haag | 8. Oktober 2013 | Bezard, Stéphane |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 13 17 0748

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2013

| Im Recherchenbericht angeführtes Patentdokument | Datum der Veröffentlichung | Mitglied(er) der Patentfamilie | Datum der Veröffentlichung |
|---|---|---|---|
| US 3984360 A | 05-10-1976 | AU 8409775 A | 24-02-1977 |
| | | BE 835257 A1 | 01-03-1976 |
| | | CA 1040797 A1 | 17-10-1978 |
| | | DE 2537568 A1 | 13-05-1976 |
| | | FR 2291228 A1 | 11-06-1976 |
| | | GB 1517720 A | 12-07-1978 |
| | | IL 47915 A | 17-12-1978 |
| | | IT 1041979 B | 10-01-1980 |
| | | JP S5176389 A | 01-07-1976 |
| | | JP S5850249 B2 | 09-11-1983 |
| | | MX 146323 A | 08-06-1982 |
| | | NL 7511511 A | 14-05-1976 |
| | | US 3984360 A | 05-10-1976 |
| WO 2012126742 A1 | 27-09-2012 | KEINE | |
| EP 1142964 A2 | 10-10-2001 | AT 328040 T | 15-06-2006 |
| | | DE 10015889 A1 | 25-10-2001 |
| | | EP 1142964 A2 | 10-10-2001 |
| | | ES 2265369 T3 | 16-02-2007 |
| | | JP 2001329219 A | 27-11-2001 |
| | | KR 20010095168 A | 03-11-2001 |
| | | TW 577911 B | 01-03-2004 |
| | | US 2001027226 A1 | 04-10-2001 |
| EP 0477840 A1 | 01-04-1992 | AT 187191 T | 15-12-1999 |
| | | AU 637937 B2 | 10-06-1993 |
| | | AU 8471991 A | 02-04-1992 |
| | | BR 9104176 A | 02-06-1992 |
| | | CA 2052286 A1 | 29-03-1992 |
| | | DE 69131815 D1 | 05-01-2000 |
| | | DE 69131815 T2 | 30-11-2000 |
| | | EP 0477840 A1 | 01-04-1992 |
| | | ES 2142794 T3 | 01-05-2000 |
| | | JP 2507842 B2 | 19-06-1996 |
| | | JP 2653995 B2 | 17-09-1997 |
| | | JP H04272975 A | 29-09-1992 |
| | | JP H08127634 A | 21-05-1996 |
| | | MX 173824 B | 29-03-1994 |
| | | NO 913761 A | 30-03-1992 |
| | | US 5108832 A | 28-04-1992 |
| DE 102011116960 B3 | 25-10-2012 | DE 102011116960 B3 | 25-10-2012 |
| | | WO 2013060310 A1 | 02-05-2013 |
| DE 102006025670 A1 | 14-12-2006 | AT 501930 A1 | 15-12-2006 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 13 17 0748

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2013

| Im Recherchenbericht angeführtes Patentdokument | Datum der Veröffentlichung | Mitglied(er) der Patentfamilie | Datum der Veröffentlichung |
|---|---|---|---|
| | | DE 102006025670 A1 | 14-12-2006 |
| | | GB 2428242 A | 24-01-2007 |
| | | NL 1031937 A1 | 04-12-2006 |
| | | NL 1031937 C2 | 09-05-2007 |
| US 5126170 A | 30-06-1992 | AT 113622 T | 15-11-1994 |
| | | AU 623536 B2 | 14-05-1992 |
| | | AU 5777990 A | 03-01-1991 |
| | | BR 9002948 A | 20-08-1991 |
| | | CA 2018803 A1 | 23-12-1990 |
| | | DD 297982 A5 | 30-01-1992 |
| | | EP 0403921 A2 | 27-12-1990 |
| | | ES 2062188 T3 | 16-12-1994 |
| | | JP H0343472 A | 25-02-1991 |
| | | JP H0653871 B2 | 20-07-1994 |
| | | US 5126170 A | 30-06-1992 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4940770 A
- DE 2609488 A1
- WO 2012030338 A1
- EP 0403921 A2
- EP 0743332 A1
- GB 2007689 A1
- EP 139401 A1
- US 3969291 A1
- EP 1489136 A1
- US 4442157 A
- US 3562197 A
- GB 755551 A
- EP 138546 A1

### In der Beschreibung aufgeführte Nicht-Patentliteratur

- *PAC,* 1995, vol. 67, 1307
- Glossary of class names of organic compounds and reactivity intermediates based on structure. *IUPAC Recommendations,* 1995
- **S. V LEVCHIK ; E. D WEIL.** *Polym. Int.,* 2004, vol. 53, 1901-1929
- Flame Retardants for Plastic and Textiles - Practical Applications. Hanser, 2009